# EUROPÄISCHE PATENTSCHRIFT

(11) **EP 2 808 843 B1**
(45) Veröffentlichungstag und Bekanntmachung des Hinweises auf die Patenterteilung: **14.11.2018**
(21) Anmeldenummer: 14161977.5
(22) Anmeldetag: 27.03.2014
(51) Int. Cl.: G06T 7/00

(54) **Verfahren zur Parametrierung eines Bildverarbeitungssystems für die Überwachung einer Werkzeugmaschine**
Method of parameterisation of an image processing system for the monitoring of a machine tool
Procédé de paramétrage d'un système de traitement d'image pour la surveillance d'une machine-outil

(30) Priorität: 27.05.2013 DE 102013209800
(43) Veröffentlichungstag der Anmeldung: 03.12.2014
(73) Patentinhaber: Dr. Johannes Heidenhain GmbH, 83301 Traunreut (DE)
(72) Erfinder: Fuchs, Matthias, 83278 Traunstein (DE); Schilcher, Martin, 83374 Traunwalchen (DE)

(56) Entgegenhaltungen:
- EP-A1- 2 211 305
- WO-A1-2011/074183
- US-A1- 2011 317 906

## Beschreibung

### GEBIET DER TECHNIK

Die Erfindung betrifft ein Verfahren zur Parametrierung eines Bildverarbeitungssystems für die Überwachung einer Werkzeugmaschine. Solche Bildverarbeitungssysteme können helfen, eine numerisch gesteuerte Werkzeugmaschine bei der Bearbeitung von Werkstücken mittels einer oder mehrerer Kameras zu überwachen. Dabei können schon während des Bearbeitungsprozesses Fehler erkannt und beseitigt werden. Die Parametrierung des Bildverarbeitungssystems ist allerdings recht aufwändig, da sehr viele Parameter einen Einfluss auf die erfolgreiche Bildverarbeitung haben.

### STAND DER TECHNIK

Zur Überwachung von Bearbeitungsprozessen an Werkzeugmaschinen ist es seit langem bekannt, Bildverarbeitungssysteme zu verwenden. Hierzu werden im Bearbeitungsraum eine oder mehrere Kameras installiert, die den zu überwachenden Prozess beobachten.

So wurde schon in der DD 0153746 vorgeschlagen, mittels einer Kamera Bilder von für gut befundenen Werkzeugen aufzunehmen und als Referenzbilder zu speichern. Vor jedem Einsatz eines Werkzeuges wird dann ein aktuelles Bild des Werkzeugs aufgenommen. Nur wenn der Vergleich von Referenzbild und aktuellem Bild eine Übereinstimmung ergibt, wird der Bearbeitungsvorgang freigegeben. In dieser Anwendung ist die Bildauswertung vergleichsweise einfach zu bewerkstelligen, indem die Kamerabilder auf ein Bild mit lediglich weißen und schwarzen Pixeln umgerechnet und miteinander verglichen werden. Ein abgebrochenes und damit zu kurzes Werkzeug ist so sehr einfach zu erkennen. Weniger auffällige Unterschiede am Werkzeug oder auch am Werkstück sind für eine genauere Prozesskontrolle jedoch wesentlich schwieriger auszuwerten.

So wird in der US 5283418 die Überwachung eines Lichtbogenschweißprozesses beschrieben. Hierzu wird der Lichtbogen mit einer Kamera aufgenommen. Anhand von Bildern normaler und anormaler Zustände des Lichtbogens wird ein neuronales Netzwerk trainiert, das später anhand eines aktuellen Kamerabildes entscheidet, ob der aktuelle Schweißprozess richtig abläuft oder nicht. Bei sich ändernden Rahmenbedingungen kann das Training des neuronalen Netzes wiederholt oder ergänzt werden, so dass ein sich ständig adaptierender, lernender Algorithmus darüber entscheidet, ob der Prozess richtig abläuft.

Aus den Dokumenten US 2011/317906 A1 und US 2013/140457 A1 sind ebenso wie aus der EP 2211305 A1 Verfahren bekannt, die dem "beaufsichtigen Lernen" eines optimalen Satzes von Parametern einer Bildauswertung dienen, indem ein Satz von Trainingsbildern mit bekannten Eigenschaften herangezogen wird, um die Qualität eines Parametersatzes zu beurteilen.

Beim Einsatz von Kameras und Bildverarbeitungssystemen in Werkzeugmaschinen stellt sich jedoch ein weiteres Problem, das wegen der recht extremen Bedingungen im Arbeitsraum einer Werkzeugmaschine besonders gravierend ist. So müssen vor jeder Auswertung von Kamerabildern bestimmte Parameter eingestellt werden, die einen erheblichen Einfluss auf den zur eigentlichen Bildauswertung verwendeten Algorithmus haben. Beispiele für solche Parameter sind nachträgliche Kontrast- und Belichtungskorrekturen des aufgenommenen Bildes, oder eine Grauwertdifferenz zwischen Referenzbild und aktuellem Bild, ab der auf einen Unterschied zwischen den beiden Bildern geschlossen wird. Auch die Auswahl bestimmter Kanten, die nach einem Algorithmus zur Kantenextraktion als wesentlich markiert werden, und der Abstand zwischen einer detektierten Kante und deren Sollposition sind Beispiele für solche Parameter. Die Algorithmen zur Extraktion von Kanten wie beispielsweise der Canny - Algorithmus haben ebenfalls Parameter, die optimiert werden müssen.

Die sorgfältige Wahl dieser Parameter ist eine wesentliche Voraussetzung für eine gut funktionierende Prozesskontrolle, die möglichst keine falschen Alarme und damit keine unnötige Unterbrechung des Prozesses bewirken soll, aber auch keine fehlerhaften Prozesse übersehen darf.

### ZUSAMMENFASSUNG DER ERFINDUNG

Aufgabe der Erfindung ist es daher, ein Verfahren zur Parametrierung eines Bildverarbeitungssystems für die Überwachung einer Werkzeugmaschine anzugeben, das den Anwender dabei unterstützt, die Parametrierung des Bildverarbeitungssystems und damit die Prozesskontrolle insgesamt zu optimieren.

Diese Aufgabe wird gelöst durch ein Verfahren nach Anspruch 1. Vorteilhafte Details des Verfahrens ergeben sich aus den von Anspruch 1 abhängigen Ansprüchen.

Es wird eine Verfahren zur Parametrierung eines Bildverarbeitungssystems für die Überwachung einer Werkzeugmaschine offenbart, das mittels einer oder mehrerer Kameras einen Bearbeitungsraum der Werkzeugmaschine überwacht. Dabei werden vor, während oder nach einem Bearbeitungsprozess Bilder vom Werkstück und seiner Umgebung aufgenommen und vom Bildverarbeitungssystem eine Entscheidung getroffen, ob ein Bild einen Gutfall oder einen Schlechtfall zeigt. Zur Parametrierung des Bildverarbeitungssystems dienen folgende Schritte:
- In einem Initialisierungsschritt wird das Bildverarbeitungssystem mit vorläufigen Parametern initialisiert.
- In einem Rohdatenerfassungsschritt wird ein Satz von mehreren Bildern als von der Parametrierung des Bildverarbeitungssystems unabhängige Rohdaten abgespeichert, jeweils zusammen mit einer Information, ob ein Bild einen Gutfall oder einen Schlechtfall zeigt.
- In einem Parameteränderungsschritt werden solche Parameter des Bildverarbeitungssystems geändert, die das Ergebnis der Auswertung der Bilder beeinflussen.
- in einem Beurteilungsschritt werden die Rohdaten vom Bildverarbeitungssystem unter Verwendung der Parameter verarbeitet und dabei in Gutfälle und Schlechtfälle eingeteilt, und die vom Bildverarbeitungssystem vorgenommene Einteilung in Gutfälle und Schlechtfälle mit der zusammen mit den Rohdaten gespeicherten gut/schlecht - Information verglichen, wobei bei einer ausreichenden Übereinstimmung der Einteilung mit der gut/schlecht
   - Information die Parametrierung des Bilderfassungssystems beendet ist, und ansonsten zum Parameteränderungsschritt verzweigt wird.

Durch das Abspeichern von Kamerabildern als Rohdaten, die nicht von der Parametrierung des Bildverarbeitungssystems abhängen, zusammen mit der gut/schlecht - Information, ist es möglich, die Auswirkung einer Parameteränderung zu testen, ohne eine echte Bearbeitung eines Werkstückes durchführen zu müssen. Dies spart Maschinenzeit, vermeidet unnötigen Ausschuss durch nicht erkannte Fehler, und beschleunigt die Parametrierung des Bildverarbeitungssystems erheblich.

Ferner ist es möglich, die Optimierung der Parametrierung des Bildverarbeitungssystems offline, also ohne während dessen eine Werkzeugmaschine zu belegen, durchzuführen. Hierzu werden die abgespeicherten Bilder als Rohdaten verwendet. Es können so auch die während einer mannlosen Schicht angefallenen Bilder nachträglich gesichtet und mit einer gut/schlecht Information versehen werden, so dass gerade zu Beginn einer Serienfertigung mit großen Stückzahlen schnell ein großer Vorrat an Rohdaten angelegt werden kann, der dann bei einer späteren Optimierung der Parametrierung herangezogen werden kann.

Im NC-Programm für die Fertigung eines Werkstückes werden zu verschiedenen Bearbeitungsständen Überwachungspunkte eingefügt, an denen die eigentliche Bearbeitung unterbrochen und ein Kamerabild (evtl. auch mehrere Bilder aus verschiedenen Perspektiven) aufgenommen wird. Hierzu werden Kühl- und Schmiermedien abgeschaltet, um freie Sicht auf das Werkstück zu ermöglichen und die während des Bearbeitungsvorganges durch eine Klappe oder ähnliche Vorrichtungen geschützte Kameralinse nicht zu verschmutzen. Die Auswertung der Kamerabilder durch das Bildverarbeitungssystem anhand der zuvor gefundenen Parametrierung ermöglicht dann eine automatisierte Beurteilung des aktuellen Bearbeitungsstandes des Werkstücks.

Weitere Vorteile sowie Einzelheiten der vorliegenden Erfindung ergeben sich aus der nachfolgenden Beschreibung einer bevorzugten Ausführungsform anhand der Figuren.

### KURZE BESCHREIBUNG DER ZEICHNUNGEN

Es zeigt
- Figur 1: Ein von einer Kamera überwachtes Werkstück,
- Figur 2: die Abarbeitung eines im NC-Programm festgelegten Überwachungspunktes,
- Figur 3: das Verfahren zur Parametrierung eines Bildverarbeitungssystems für die Überwachung einer Werkzeugmaschine.

### BESCHREIBUNG DER AUSFÜHRUNGSFORMEN

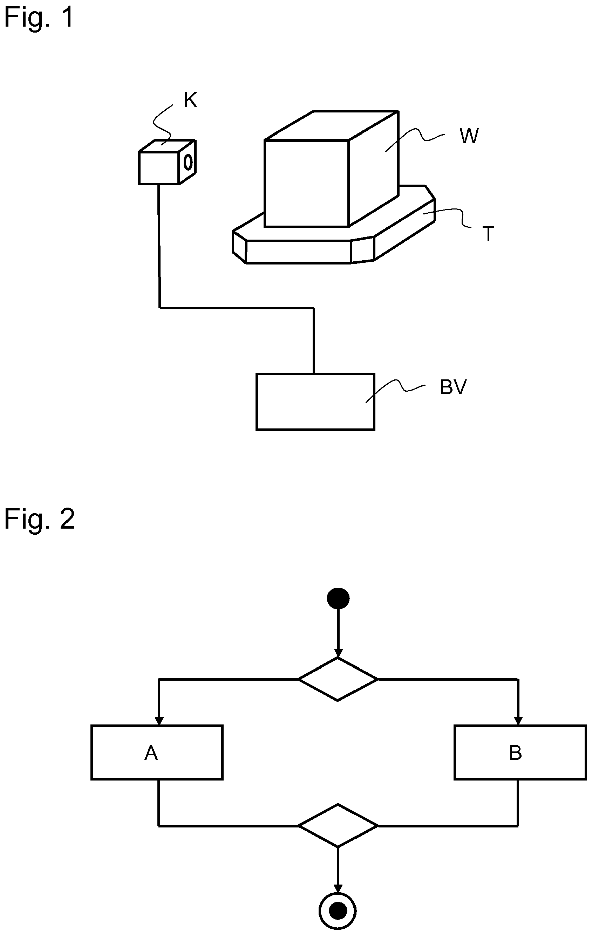

In der Figur 1 ist schematisch ein Werkstück W auf einem Maschinentisch T einer Werkzeugmaschine dargestellt, das von einer Kamera K überwacht wird. Die Kamera K übermittelt hierfür ein Bildsignal an ein Bildverarbeitungssystem BV. Dieses Bildverarbeitungssystem BV kann in einer Numerischen Steuerung integriert sein, die zur Steuerung der Werkzeugmaschine dient, oder aber ein separater, von der Numerischen Steuerung unabhängiger Rechner. Die Kamera K nimmt während eines Bearbeitungsvorganges zu definierten Zeitpunkten Bilder vom Werkstück W auf. Mit dem Begriff Werkstück W seien hier auch die zur Befestigung eines Werkstückes W verwendeten Spannmittel und die unmittelbare Umgebung des Werkstückes W umfasst, da auch der korrekte Sitz der Spannmittel überprüfbar sein soll. Die unmittelbare Umgebung eines Werkstückes W sollte überwacht werden, denn auch ein vom Bediener auf dem Tisch T vergessenes Werkzeug oder Spannmittel kann erkannt und somit eine Kollision des Bearbeitungswerkzeugs mit solchen Gegenständen vermieden werden.

Es ist sinnvoll, während der Bearbeitung eines Werkstückes W mehrere Überwachungspunkte zu setzen, um etwaige Fehler bei der Bearbeitung frühzeitig und nicht erst zum Ende eines längeren Bearbeitungsprozesses zu erkennen. Andererseits muss für die Aufnahme eines Bildes die Bearbeitung unterbrochen werden, etwa um Kühl- und Schmiermittelnebel zu vermeiden, die eine Aufnahme schwierig oder unmöglich machen. Es muss also ein Kompromiss zwischen einer guten Überwachung des Bearbeitungsvorganges und einer kurzen Bearbeitungszeit gefunden werden. In der Praxis hat sich die Abarbeitung eines oder mehrerer Überwachungspunkte im Abstand von einigen Minuten bewährt. Am Ende des Bearbeitungsvorganges sollte dabei ein letzter Überwachungspunkt vorgesehen werden. So kann sichergestellt werden, dass ein korrekt bearbeitetes Werkstück entstanden ist.

Wird nun (z.B. durch ein NC-Programm in der Numerischen Steuerung der Werkzeugmaschine) die Routine zur Kameraüberwachung eines Werkstücks W aufgerufen, so muss wie in der Figur 2 dargestellt zunächst entschieden werden, ob ein bereits existierender Überwachungspunkt kontrolliert (Verzweigung nach A), oder ein neuer Überwachungspunkt konfiguriert werden soll (Verzweigung nach B).

Die Kontrolle eines bereits konfigurierten Überwachungspunktes (Verzweigung nach A) läuft dabei so ab, dass die Kamera K und das Werkstück W in eine definierte Position zueinander gebracht werden und die weiter unten im Detail beschriebene Auswertung des Kamerabildes gestartet wird. Nacheinander werden so alle zu diesem Zeitpunkt vorgegebenen Überwachungspunkte abgearbeitet. Ergibt die Bildauswertung von einem der Überwachungspunkte einen Fehler, so wird die Bearbeitung des Werkstücks W unterbrochen. Es ist dann entweder das Eingreifen eines Bedieners nötig, oder das Werkstück W wird automatisch verworfen und gegen ein neues Werkstück W ausgewechselt. So kann auch während einer mannlosen Schicht die Fertigung fortgesetzt werden. Die Sichtung und Beurteilung der Bilder, die zu einem Fehler geführt haben, kann dann zu einem späteren Zeitpunkt nachgeholt werden.

Die Konfiguration eines neuen Überwachungspunktes (Verzweigung nach B) erfolgt spätestens, wenn ein neu erstelltes NC-Programm einen solchen Überwachungspunkt aufruft, dieser aber noch nicht konfiguriert ist. Hierzu wird zunächst die Kamera K relativ zum Werkstück W positioniert. Dies kann automatisiert anhand von vorab programmierten Koordinaten geschehen, oder auch im manuellen Einrichtbetrieb, unterstützt vom Live-Bild der Kamera K. Anschließend erfolgt eine Bildauswertung, die weiter unten näher beschrieben ist. Die Schritte des Positionierens von Kamera K und Werkstück W, sowie des Abspeicherns und des Auswertens des Bildes, werden für alle zu diesem Bearbeitungsstand des Werkstücks W vorgesehenen Überwachungspunkte wiederholt.

Als nächstes soll die Auswertung der von der Kamera K aufgenommenen Bilder im Bildverarbeitungssystem BV beschrieben werden. Hierzu können unterschiedlichste Verfahren zum Einsatz kommen, die jeweils durch andere Parameter eingestellt und in ihrer Treffsicherheit optimiert werden können. Als Beispiele seien hier genannt:
Eine erste Möglichkeit zur Bildauswertung ist der Vergleich eines Referenzbildes mit einem aktuellen Bild, durch die Ermittlung und den Vergleich von Grauwerten in bestimmten Bereichen innerhalb des Bildes. Hierzu muss ein Schwellwert für die Grauwertdifferenz parametriert werden, ab dem ein Fehler ausgelöst wird, da die Grauwerte von zwei zu verschiedenen Zeitpunkten aufgenommenen Bildern (also vom Referenzbild und vom aktuellen Bild) nie exakt gleich sein werden. Da außerdem einzelne Pixel eines Bildes durch unterschiedlichste Effekte (z.B. Bildrauschen) vom Referenzbild abweichen können, sollte auch eine Anzahl zusammenhängender Pixel definiert sein, deren mittlere Grauwertabweichung vom Referenzbild oberhalb des Schwellwertes liegen muss, bevor ein Fehler ausgelöst bzw. ein Schlechtfall angenommen wird. Eine Fläche von ca. 50 Pixeln hat sich hierfür bewährt. Neben dem Schwellwert und der zusammenhängenden Pixelfläche ist auch der betrachtete Bereich innerhalb eines Bildes ein Parameter im Sinne dieser Anmeldung, denn zur Auswertung sollten natürlich nur möglichst aussagekräftige Bereiche eines Werkstückes W ausgewählt werden, und nicht etwa der auf dem Bild ebenfalls erkennbare Hintergrund.

Eine weitere Möglichkeit zur Auswertung eines Kamerabildes ist die Suche nach Kanten innerhalb des Bildes. Die gefundenen Kanten können mit den in einem Referenzbild gefundenen Kanten verglichen werden, oder mit der erwarteten Lage der Kanten, die sich aus CAD-Daten oder dem abgearbeiteten NC-Programm der Numerischen Steuerung ergibt. Die Auswahl bestimmter Kanten, die nach einem Algorithmus zur Kantenextraktion als wesentlich markiert werden, und der maximal erlaubte Abstand zwischen der detektierten Kante und deren Sollposition, sind weitere Beispiele für Parameter, die für ein optimales Ergebnis eingestellt werden müssen. Auch die Algorithmen zur Extraktion von Kanten haben Parameter, die optimiert werden müssen. Ein Beispiel für solch einen in der Bildverarbeitung weit verbreiteten Algorithmus ist der Canny-Algorithmus, in dessen Verlauf die Grauwerte jedes Pixels als gewichteter Mittelwert der ihn umgebenden Pixel berechnet werden. Die dabei verwendeten Gewichtungen sind ebenfalls Beispiele für zu optimierende Parameter.

Die genannten Verfahren haben jeweils unterschiedliche, spezifische Parameter, die für eine optimal eingestellte, automatisierte Bildauswertung entscheidend sind. Es gibt aber auch Parameter, die unabhängig vom Auswerteverfahren für jede Bildauswertung wichtig sind, wie z.B. nachträgliche Korrekturen der Helligkeit, des Kontrastes oder anderer allgemeiner Bildparameter. Die sorgfältige Wahl dieser Parameter für jeden Überwachungspunkt bzw. für das an diesem Überwachungspunkt auszuwertende Bild ist eine wesentliche Voraussetzung für eine gut funktionierende Prozesskontrolle.

Die automatisierte Auswertung der Kamerabilder soll möglichst nur solche Werkstücke W als Gutfälle bewerten, die auch tatsächlich den Spezifikationen entsprechen, denn ein fälschlicherweise als gut klassifiziertes Werkstück W (falsch positiv) kann bei der Weiterverarbeitung erhebliche Folgeschäden verursachen. Andererseits darf die automatisierte Bildauswertung auch nicht zu viele gute Werkstücke als Schlechtfall klassifizieren (falsch negativ), da die Bearbeitung des Werkstücks in diesem Fall unnötig unterbrochen wird und so kostbare Maschinenzeit verloren geht.

Der Anwender soll daher bei der Parametrierung des Bildverarbeitungssystems BV bestmöglich unterstützt werden, um dem Ziel einer fehlerfrei arbeitenden Bildauswertung im Sinne einer korrekten Einteilung in Gutfälle und Schlechtfälle möglichst nahe zu kommen.

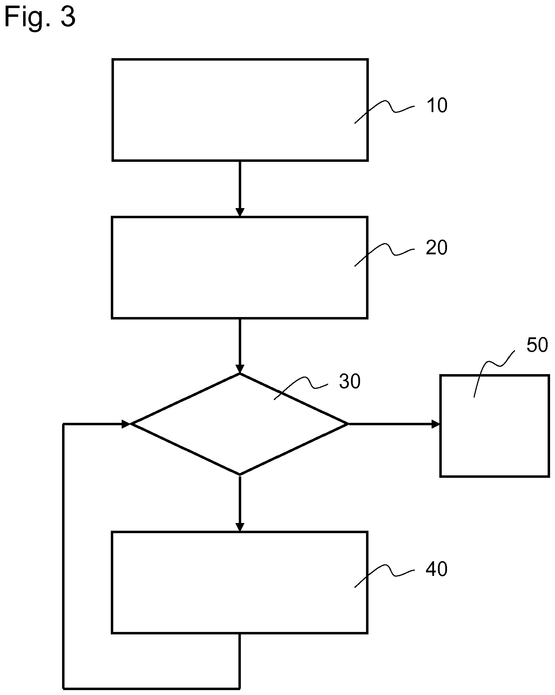

In der Figur 3 ist ein Verfahren skizziert, mit dem dieses Ziel erreicht werden kann. In einem Initialisierungsschritt 10 wird das Bildverarbeitungssystem BV zunächst mit sinnvollen Startparametern als vorläufige, noch zu optimierende Parametrierung initialisiert. Viele Parameter wie etwa Grauwertschwellen oder die oben genannten zusammenhängenden Pixelflächen können anhand von Erfahrungswerten für alle Überwachungspunkte vorbelegt und später bei Bedarf einzeln für jeden Überwachungspunkt optimiert werden. Andere Parameter, etwa die Auswahl geeigneter Kanten in einem konkreten Bild, können erst bei der ersten Bearbeitung eines Werkstückes initialisiert werden, indem z.B. erstmals eine Kante in einem Kamerabild selektiert wird.

Während der ersten Bearbeitung werden in einem Rohdatenerfassungsschritt 20 außerdem Kamerabilder als Rohdaten abgespeichert. Diese Bilder sind insofern Rohdaten, als ihr Inhalt nicht von den Parametern abhängt, die mit dem hier beschriebenen Verfahren zur Parametrierung eines Bildverarbeitungssystems BV eingestellt werden sollen. Vielmehr haben diese Parameter Einfluss auf die Auswertung dieser als Rohdaten gespeicherten Bilder, und später auch auf die Auswertung der aktuellen, während der Bearbeitung anfallenden Kamerabilder. Während diesem Rohdatenerfassungsschritt 20 wird außerdem zu jedem Bild eine gut/schlecht - Information abgespeichert, also ob es einen Gutfall oder einen Schlechtfall zeigt. Da während einer einzigen Bearbeitung eines Werkstückes W nur ein Satz an Bildern als Rohdaten anfällt, wird die Kameraüberwachung sinnvoller Weise auch bei den folgenden Bearbeitungsvorgängen in einem vom Bediener überwachten Modus betrieben, wobei weitere Bilder von unterschiedlichen Werkstücken W anfallen und als Rohdaten zusammen mit einer vom Bediener bestätigten Information über das Vorliegen eines Gut- oder Schlechtfalles abgespeichert werden. Auf diese Weise entsteht eine Sammlung von Rohdaten in Form von Bildern mit gesicherter Gut-/Schlechtinformation, die somit Expertenwissen bereit hält und zur Optimierung der Parametrierung herangezogen werden kann.

Da wie oben erwähnt gewisse Parameter erst anhand eines ersten Referenzbildes gewählt werden können, laufen der Initialisierungsschritt 10 und der Rohdatenerfassungsschritt 20 evtl. zeitlich parallel ab bzw. überschneiden sich zeitlich.

Um beurteilen zu können, ob die im Initialisierungsschritt 10 und während der ersten Rohdatenerfassung 20 festgelegte Parametrierung des Bildverarbeitungssystems BV bereits eine ausreichend gute Erkennungsleistung liefert, wird in einem Beurteilungsschritt 30 anhand der Rohdaten geprüft, ob diese richtig in Gut- und Schlechtfälle eingeteilt werden. Im Allgemeinen wird dies zunächst nicht der Fall sein, und es wird vom Beurteilungsschritt 30 zu einem Parameteränderungsschritt 40 verzweigt. Die Einleitung des Parameteränderungsschrittes 40 kann auch vorgesehen werden, wenn bei der Bearbeitung weiterer Werkstücke W zu häufig der Fall auftritt, dass das Bildverarbeitungssystem BV einen Gutfall fälschlicherweise als Schlechtfall klassifiziert (dieser Fehler fällt immer auf, denn dann bleibt der Bearbeitungsprozess stehen und ein Bediener muss die Lage überprüfen), oder ein schlechtes Werkstück als Gutfall klassifiziert wird (dies fällt nur auf, solange das Bildverarbeitungssystem BV in einem überwachten Modus läuft). Im Beurteilungsschritt 30 verarbeitet also das Bildverarbeitungssystem BV die gespeicherten Rohdaten so wie im Normalbetrieb (nach Abschluss der Parametrierung) die von der Kamera K erhaltenen aktuellen Bilder eines gerade bearbeiteten Werkstückes W.

Dann können im Parameteränderungsschritt 40 die zur Bildauswertung im Bildverarbeitungssystem BV wesentlichen Parameter geändert werden. Hier werden solche Parameter des Bildverarbeitungssystems BV geändert, die einen Einfluss auf das Ergebnis der Bildverarbeitung haben, die also die Entscheidung über einen Gut- oder Schlechtfall beeinflussen können.

So können hier beispielsweise andere Kanten gewählt werden, die für eine Kantenauswertung heran gezogen werden, oder es kann die Toleranz verändert werden, innerhalb der eine Kante im Vergleich zu ihrer erwarteten Position liegen darf. Auch die Parameter des Kantendetektionsalgorithmus selbst können verändert werden. Es kann die Grauwerttoleranz verändert werden, ab der auf einen Fehler im Vergleich zu einem Referenzbild geschlossen wird, oder die Anzahl der zusammenhängenden Pixel, für die ein Mittelwert des Grauwertes bestimmt wird.

Die im Parameteränderungsschritt 40 vorgenommenen Änderungen sollten vorläufig durchgeführt werden, so dass also bei Bedarf zu einer vorherigen oder noch früheren Parametrierung zurückgekehrt werden kann, etwa in dem alle Parameter einer aktuellen Parametrierung vor einer Änderung mit einem Zeitstempel gespeichert werden, um bei Bedarf darauf zurück greifen zu können.

Um nun beurteilen zu können, ob diese vorgenommenen Parameteränderungen erfolgreich im Sinne einer verbesserten Erkennungsleistung des Bildverarbeitungssystems BV sind, und um zu verhindern, dass die Erkennungsleistung womöglich sogar verschlechtert wird, werden in einem erneuten Beurteilungsschritt 30 die als Rohdaten gespeicherten Bilder des Werkstücks W vom Bildverarbeitungssystem BV mit der zunächst vorläufig geänderten Parametrierung ausgewertet und dabei in Gutfälle und Schlechtfälle eingeteilt und dieses Ergebnis mit der zusammen mit den Rohdaten gespeicherten gut/schlecht - Information verglichen. So kann beurteilt werden, ob die Erkennungsleistung des Bildverarbeitungssystems BV verbessert wurde, und ob das Ergebnis ausreichend gut ist, um das Bildverarbeitungssystem BV von nun an ohne Aufsicht laufen zu lassen, also ohne dass die einzelnen Überwachungspunkte zusätzlich vom Bediener beurteilt werden.

Ist die Leistung des Bildverarbeitungssystems BV noch nicht zufriedenstellend, so kann erneut zum Parameteränderungsschritt 40 verzweigt werden, um weiter nach einer optimalen Parametrierung zu suchen. Ist sie jedoch ausreichend gut, so kann zu einem Schritt 50 verzweigt werden, der das Ende des Verfahrens zur Parametrierung des Bildverarbeitungssystems BV darstellt. Der gefundene Satz an Parametern (also die Parametrierung) des Bildverarbeitungssystems BV wird nun im eigentlichen Betrieb der Werkzeugmaschine zur Überwachung eines Bearbeitungsvorganges eingesetzt.

Die hier beschriebenen Schritte Initialisierungsschritt 10, Rohdatenerfassungsschritt 20, Beurteilungsschritt 30 und Parameteränderungsschritt 40 müssen nicht zwingend in der Reihenfolge wie in Figur 3 dargestellt ablaufen. So finden der Initialisierungsschritt 10 und der Rohdatenerfassungsschritt 20 wie erwähnt in manchen Fällen gleichzeitig statt, wenn bei der ersten Bearbeitung ein Bild als Referenzbild gespeichert wird und damit selbst zu einem Parameter wird, oder in so einem Referenzbild eine Kante oder ein Bereich zur Auswertung ausgewählt wird. Außerdem kann es verschiedene Anlässe geben, um zum Parameteränderungsschritt 40 zu springen, also etwa unmittelbar nach dem ersten Rohdatenerfassungsschritt 20, bei einer nicht zufriedenstellenden Erkennungsleistung des Bildverarbeitungssystems BV, oder nach einer Änderung der Umgebungsbedingungen.

Ein großer Vorteil des Verfahrens zur Parametrierung eines Bildverarbeitungssystems BV besteht darin, dass die Optimierung der Parameter auch offline, also ohne eine konkrete Werkstückbearbeitung an einem externen PC erfolgen kann. So können etwa während einer mannlosen Schicht angefallene Bilder nachträglich und offline gesichtet und beurteilt und dann zu den Rohdaten addiert werden (erneuter Rohdatenerfassungsschritt 20), und bei einer späteren Parameteroptimierung (weiterer Parameteränderungsschritt 40 und Beurteilungsschritt 30) berücksichtigt werden.

Ein Verfahren zur Überwachung einer Werkzeugmaschine verwendet somit ein Bildverarbeitungssystem BV, das auf die oben beschriebene Weise parametrierbar ist. Die eigentliche Überwachung findet dann während der Abarbeitung eines NC-Programmes statt, in dem zu verschiedenen Zeitpunkten Überwachungspunkte gesetzt sind. An einem solchen Überwachungspunkt wird ein Kamerabild des Werkstücks W erfasst und vom Bildverarbeitungssystem BV beurteilt. Erkennt das Bildverarbeitungssystem BV einen Gutfall, wird das NC-Programm fortgesetzt, andernfalls wird die Bearbeitung des Werkstücks angehalten und eine Beurteilung durch den Bediener abgewartet. Liegt tatsächlich ein Fehler vor, so kann das Werkstück verworfen und/oder die Fehlerursache beseitigt werden. Liegt jedoch kein Fehler vor (ist das Werkstück W also in Ordnung) so kann das Bild, auf dem fälschlicherweise ein Fehler erkannt wurde, zu den Rohdaten addiert werden, zusammen mit der Information, dass es sich um einen Gutfall handelt. Es kann dann sofort (oder auch später offline) in einem Parameteränderungsschritt 40 eine optimierte Parametrierung gesucht werden, die vor allem die zusätzlichen Rohdaten nun richtig beurteilt.

Ähnlich kann vorgegangen werden, wenn später (bei einer unabhängigen Endkontrolle) schlechte Werkstücke W gefunden werden, die vom Bildverarbeitungssystem BV fälschlicherweise als Gutfall eingestuft wurden. Hierzu sollten alle vom Bildverarbeitungssystem BV ausgewerteten Bilder zumindest für eine gewisse Zeit so gespeichert werden, dass sie dem schlechten Werkstück W nachträglich zugeordnet werden können. Bei einer nachträglichen Sichtung können dann Bilder schlechter Werkstücke W identifiziert und mit der entsprechenden Information den Rohdaten zugeschlagen werden (in einem erneuten Rohdatenerfassungsschritt 20), die später zur Optimierung der Parametrierung des Bildverarbeitungssystems BV herangezogen werden (in einem erneuten Parameteränderungsschritt 40).

Das hier beschriebene Verfahren geht von konstanten Umgebungsbedingungen aus, so dass die als Rohdaten erfassten Bilder reproduzierbar sind. Ändern sich die Umgebungsbedingungen, so dass diese Voraussetzung nicht mehr erfüllt ist, so müssen zumindest die bisher verwendeten Rohdaten zusammen mit den gut/schlecht - Informationen verworfen und in einem erneuten Rohdatenerfassungsschritt neu erstellt werden. Dann kann ausgehend von der bisherigen Parametrierung oder auch von in einem Initialisierungsschritt 10 zurückgesetzten Parametrierung ausgehend eine erneute Optimierung der Parametrierung erfolgen.

## Patentansprüche

1. Verfahren zur Parametrierung eines Bildverarbeitungssystems, das mittels einer oder mehrerer Kameras (K) einen Bearbeitungsraum einer Werkzeugmaschine überwacht, wobei Bilder des Bearbeitungsraumes aufgenommen werden und vom Bildverarbeitungssystem (BV) eine Entscheidung getroffen wird, ob ein Bild einen Gutfall oder einen Schlechtfall zeigt, wobei zur Parametrierung des Bildverarbeitungssystems (BV)
- in einem Initialisierungsschritt (10) das Bildverarbeitungssystem (BV) mit vorläufigen Parametern initialisiert wird,
- in einem Rohdatenerfassungsschritt (20) ein Satz von mehreren Bildern als von der Parametrierung des Bildverarbeitungssystems (BV) unabhängige Rohdaten abgespeichert wird, jeweils zusammen mit einer Information, ob ein Bild einen Gutfall oder einen Schlechtfall zeigt,
- in einem Parameteränderungsschritt (40) solche Parameter des Bildverarbeitungssystems (BV) geändert werden, die das Ergebnis der Bildverarbeitung beeinflussen, wobei die Parameter die Auswahl bestimmter innerhalb der Bilder detektierter Kanten, die als wesentlich markiert werden, und deren maximal erlaubter Abstand von einer Sollposition der Kanten umfassen,
- in einem Beurteilungsschritt (30) die Rohdaten vom Bildverarbeitungssystem (BV) unter Verwendung der geänderten Parameter verarbeitet und dabei in Gutfälle und Schlechtfälle eingeteilt werden, dann die vom Bildverarbeitungssystem (BV) vorgenommene Einteilung in Gutfälle und Schlechtfälle mit den zusammen mit den Rohdaten gespeicherten gut/schlecht - Informationen verglichen wird, wobei bei einer ausreichenden Übereinstimmung der Einteilung mit den gut/schlecht - Informationen die Parametrierung des Bildverarbeitungssystems (BV) beendet ist, und ansonsten zum Parameteränderungsschritt (40) verzweigt wird.

2. Verfahren nach Anspruch 1, **dadurch gekennzeichnet, dass** ein vom Bildverarbeitungssystem (BV) falsch negativ erkanntes Bild zu den Rohdaten addiert wird, zusammen mit der Information, dass dieses Bild einen Gutfall zeigt.

3. Verfahren nach Anspruch 1 oder 2, **dadurch gekennzeichnet, dass** ein vom Bildverarbeitungssystem (BV) falsch positiv erkanntes Bild zu den Rohdaten addiert wird, zusammen mit der Information, dass dieses Bild einen Schlechtfall zeigt.

4. Verfahren nach einem der vorhergehenden Ansprüche, **dadurch gekennzeichnet, dass** zumindest ein Teil der als Rohdaten gespeicherten Bilder während einer nachträglichen Sichtung von während eines Bearbeitungsvorganges gespeicherten Bildern ausgewählt und zusammen mit einer gut-/schlecht - Information gespeichert werden.

5. Verfahren nach einem der Ansprüche 2 - 4, **dadurch gekennzeichnet, dass** nach einer Addition zusätzlicher Rohdaten ein erneuter Parameteränderungsschritt (40), gefolgt von einem Beurteilungsschritt (30) durchgeführt wird.

## Claims

1. Method for parameterizing an image processing system, which monitors a processing space of a machine tool by means of one or more cameras (K), wherein images of the processing space are recorded and the image processing system (BV) makes a decision as to whether an image shows a good case or a bad case, wherein, for the purposes of parameterizing the image processing system (BV),
- the image processing system (BV) is initialized with preliminary parameters in an initialization step (10),
- a set of a plurality of images are stored as raw data that are independent of the parameterization of the image processing system (BV) in a raw data capture step (20), in each case together with an item of information as to whether an image shows a good case or a bad case,
- such parameters of the image processing system (BV) that influence the result of the image processing are modified in a parameter modification step (40), wherein the parameters comprise the selection of certain edges detected within the images, said edges being marked as essential, and the maximum permissible distance of said edges from a setpoint position of the edges,
- the raw data is processed by the image processing system (BV) using the modified parameters in an assessment step (30) and, in the process, divided into good cases and bad cases, the division into good cases and bad cases undertaken by the image processing system (BV) thereupon being compared to the good/bad items of information stored together with the raw data, wherein the parameterization of the image processing system (BV) is terminated in the case of a sufficient correspondence of the division with the good/bad items of information and, otherwise, there is a jump to the parameter modification step (40).

2. Method according to Claim 1, **characterized in that** an image incorrectly identified as negative by the image processing system (BV) is added to the raw data, together with the item of information that this image shows a good case.

3. Method according to Claim 1 or 2, **characterized in that** an image incorrectly identified as positive by the image processing system (BV) is added to the raw data, together with the item of information that this image shows a bad case.

4. Method according to any one of the preceding claims, **characterized in that** at least some of the images stored as raw data are selected during a subsequent inspection of images stored during a processing process and stored together with a good/bad item of infromation.

5. Method according to any one of Claims 2-4, **characterized in that** another parameter modification step (40), followed by an assessment step (30), is implemented after an addition of additional raw data.

## Revendications

1. Procédé de paramétrage d'un système de traitement d'image qui surveille une zone d'usinage d'une machine-outil au moyen d'une ou plusieurs caméras (K), dans lequel des images de la zone d'usinage sont acquises et une décision est prise par le système de traitement d'image (BV) indiquant si une image correspond à un cas favorable ou défavorable,
dans lequel, pour le paramétrage du système de traitement d'image (BV),
- lors d'une étape d'initialisation (10), le système de traitement d'image (BV) est initialisé avec des paramètres préliminaires,
- lors d'une étape d'acquisition de données brutes (20), un ensemble d'une pluralité d'images est stocké en tant que données brutes indépendamment du paramétrage du système de traitement d'image (BV), chaque fois avec une information indiquant si une image correspond à un cas favorable ou défavorable,
- lors d'une étape de modification de paramètres (40), les paramètres du système de traitement d'image (BV) qui ont une influence sur le résultat du traitement d'image sont modifiés, dans lequel les paramètres comprennent la sélection de bords déterminés détectés dans les images et qui sont marqués comme étant importants, et leur distance maximale autorisée par rapport à une position nominale des bords,
- lors d'une étape d'évaluation (30), les données brutes sont traitées par le système de traitement d'image (BV) en utilisant les paramètres modifiés et sont réparties en cas favorables et défavorables, puis la répartition en cas favorables et défavorables effectuée par le système de traitement d'image (BV) est comparée avec les informations favorables/défavorables enregistrées avec les données brutes, dans lequel, lors d'une concordance suffisante entre la répartition et les informations favorables/défavorables, le paramétrage du système de traitement d'image (BV) est interrompu, et dans le cas contraire, un passage est effectué à l'étape de modification des paramètres (40).

2. Procédé selon la revendication 1, **caractérisé en ce qu'**une image reconnue comme étant un faux négatif par le système de traitement d'image (BV) est ajoutée aux données brutes avec l'information indiquant que ladite image correspond à un cas favorable.

3. Procédé selon la revendication 1 ou 2, **caractérisé en ce qu'**une image reconnue comme étant un faux positif par le système de traitement d'image (BV) est ajoutée aux données brutes avec l'information indiquant que ladite image correspond à un cas défavorable.

4. Procédé selon l'une des revendications précédentes, **caractérisé en ce qu'**au moins une partie des images stockées en tant que données brutes sont sélectionnées lors d'une visualisation ultérieure d'images stockées pendant un processus de traitement et sont stockées en association avec une information favorable/défavorable.

5. Procédé selon l'une des revendications 2 à 4, **caractérisé en ce qu'**après un ajout de données brutes supplémentaires, une étape de modification de paramètres (40) est de nouveau effectuée, suivie d'une étape d'évaluation (30).
